# EUROPÄISCHE PATENTANMELDUNG

(11) **EP 4 258 600 A1**
(43) Veröffentlichungstag der Anmeldung: **11.10.2023**
(21) Anmeldenummer: 23159903.6
(22) Anmeldetag: 03.03.2023
(51) Int. Cl.: H04L 9/40

(54) **RECHNERANORDNUNG, VERFAHREN ZUM VERBINDEN EINES ERSTEN RECHNERS ÜBER EINE CLOUD AN EIN NETZWERK VON GERÄTEN SOWIE BETRIEB EINER RECHNERANORDNUNG**

(30) Priorität: 07.04.2022 DE 102022108427
(71) Anmelder: Turck Holding GmbH, 58553 Halver (DE)
(72) Erfinder: Töws, Artur, 32108 Bad Salzuflen (DE)
(74) Vertreter: DTS Patent- und Rechtsanwälte Schnekenbühl und Partner mbB

(57) **Zusammenfassung**

Die vorliegende Erfindung betrifft eine Rechneranordnung mit einem ersten Rechner (1') und einem Netzwerk von Geräten (3, 4, 4', 4", 4‴), wobei der erste Rechner (1') über eine Cloud (2) an das Netzwerk von Geräten (3, 4, 4', 4", 4‴) anbindbar ist. Zur besseren Integration des physisch entfernt angeordneten ersten Rechners (1') in das Netzwerk, weist die Rechneranordnung eine virtuelle Netzwerkschnittstelle zwischen dem ersten Rechner (1', 1") und dem Netzwerk auf, welche in der Sicherungsschicht vorgesehen ist. Zudem wird ein Verfahren zum Verbinden eines ersten Rechners (1') über eine Cloud (2) an ein Netzwerk von Geräten (3, 4, 4', 4", 4‴) angegeben. Darüber hinaus betrifft die Erfindung den Betrieb einer Rechneranordnung mit einem ersten Rechner (1') und einem Netzwerk von Geräten (3, 4, 4', 4", 4‴).

## Beschreibung

Die vorliegende Erfindung betrifft eine Rechneranordnung mit einem ersten Rechner und einem Netzwerk von Geräten, wobei der erste Rechner über eine Cloud an das Netzwerk von Geräten anbindbar ist. Zudem wird ein Verfahren zum Verbinden eines ersten Rechners über eine Cloud an ein Netzwerk von Geräten angegeben. Darüber hinaus betrifft die Erfindung den Betrieb einer Rechneranordnung mit einem ersten Rechner und einem Netzwerk von Geräten.

Insbesondere hat die Erfindung ein System im Internet der Dinge (IOT) im Sinn.

Das Internet der Dinge (Internet of Things, loT) verbindet physische Objekte mit der virtuellen Welt. Intelligente Geräte und Maschinen sind dabei miteinander und mit dem Internet vernetzt. Sie erfassen relevante Informationen über ihre unmittelbare Umgebung, analysieren diese und verknüpfen sie. Auf dieser Basis erledigen die Geräte bestimmte Aufgaben.

Im Stand der Technik sind im Allgemeinen verschiedene Konfigurationen bzw. Verfahren bekannt, mit denen von einem ersten Rechner, der physikalisch entfernt von dem Netzwerk, z.B. an einem anderen Standort, vorgesehen ist, auf das Netzwerk zugegriffen werden kann und Informationen ausgetauscht werden können.

Üblicherweise, um eine sichere Verbindung zwischen diesem ersten Rechner und dem Netzwerk zu erreichen, wird eine so genannte Tunnelverbindung zwischen dem ersten Rechner und dem Netzwerk aufgebaut.

Software-Bausteine, mit denen eine solche Tunnelverbindung über das Internet (als Beispiel einer Cloud) zwischen dem ersten Rechner und dem Netzwerk hergestellt sind, sind hinlänglich bekannt.

Insbesondere wird dies üblicherweise über ein TCP bzw. TCP IP Protokoll gewährleistet.

Zum einen setzen so genannte VPN Lösungen immer einen Server voraus und es wird ein virtuelles Netzwerk zwischen dem Server und dem Rechner aufgebaut, wobei die entsprechenden Einheiten (Server, Rechner) eine IP-Adresse aus dem virtuellen Netz zugewiesen bekommen.

OpenVPN wurde von James Yonan programmiert und 2001 unter der Open-Source-Lizenz erstmals veröffentlicht. Grob gesprochen weist OpenVPN zwei Komponenten auf: ein VPN-Sicherheitsprotokoll und eine eigenständige Software, die dank Open-Source-Konzept kostenlos ist und die jede und jeder nutzen kann. Mit der OpenVPN Software kann ein virtuelles privates Netzwerk eingerichtet werden und eine sichere Verbindung zum Internet hergestellt werden. Diese Verbindung ist auch als "Tunnel" bekannt.

Es ist jedoch bis jetzt nicht bekannt, dem ersten Rechner eine IP-Adresse aus dem Netzwerk, mit dem dieser verbunden ist, zuzuweisen, das heißt eine IP Adresse, die zu einem Verbund von IP-Adressen gehört, die das Netzwerk (z.B. das loT Netzwerk, über welches Feldgeräte miteinander kommunizieren) verwendet.

Insbesondere geschieht bei bekannten Tunnelverbindungen die Verbindung im Wesentlichen über die dritte und vierte Schicht im so genannten OSI-Referenzmodell.

Das OSI-Referenzmodel (Open Systems Interconnection model) ist ein Referenzmodell für Netzwerkprotokolle als Schichtenarchitektur. Zweck des OSI-Modells ist es, Kommunikation über unterschiedlichste technische Systeme hinweg zu beschreiben und die Weiterentwicklung zu begünstigen. Dazu definiert dieses Modell sieben aufeinanderfolgende Schichten (engl. layers) mit jeweils eng begrenzten Aufgaben. In der gleichen Schicht mit klaren Schnittstellen definierte Netzwerkprotokolle sind einfach untereinander austauschbar, selbst wenn sie wie das Internet Protocol eine zentrale Funktion haben.

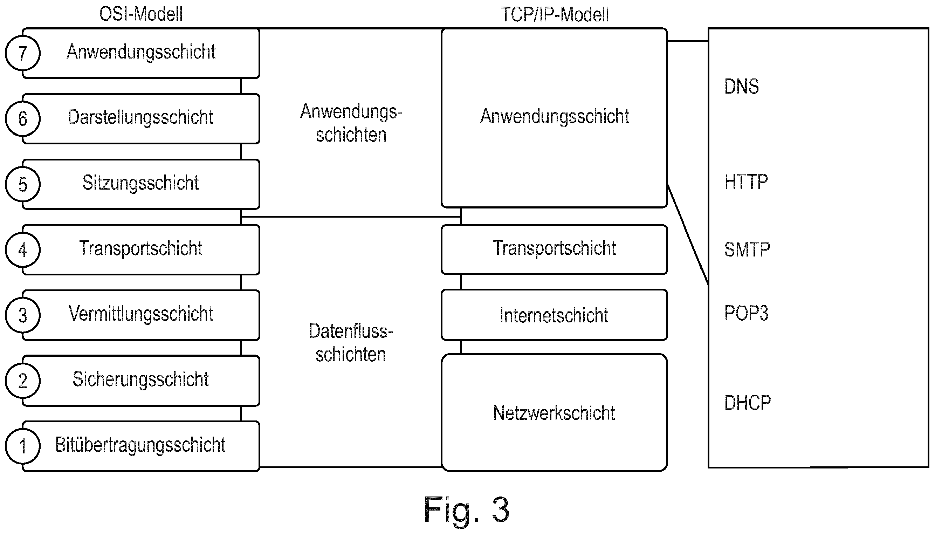

In Figur 3 wird schematisch der Schichtaufbau des OSI-Referenzmodel dem Schichtaufbau des TCP/IP Models gegenübergestellt.

Bei dem OSI-Standard ist die Schicht 1 die so genannte physikalische Schicht bzw. Bitübertragungsschicht. Die Schicht 2 die Sicherungsschicht (Datalink Layer). Die Schicht 3 die Vermittlungsschicht (Network Layer), die Schicht 4 die Transportschicht (Transport Layer), die Schicht 5 die Sitzungsschicht (Session Layer), die Schicht 6 die Darstellungsschicht (Presentation Layer), die Schicht 7 die Anwendungsschicht (Application Layer).

Zur besseren Integration des physisch entfernt angeordneten ersten Rechners (1') in das Netzwerk und damit zur Lösung der vorbeschriebenen Probleme gibt die Erfindung eine Rechenanordnung mit den Merkmalen von Anspruch 1 an. Diese zeichnet sich gemäß einer Variante dadurch aus, dass in der Sicherheitsschicht eine virtuelle Netzwerkschnittstelle zwischen dem ersten Rechner und dem Netzwerk vorgesehen ist. Alternativ oder zusätzlich kann die virtuelle Netzwerkschnittstelle auch in der Vermittlungsschicht vorgesehen sein.

Dadurch ist es möglich, dass im ersten Rechner eine IP-Adresse aus dem Netzwerk zugeordnet wird, das heißt eine IP Adresse, die zu einem Verbund von IP-Adressen gehört, die das Netzwerk (z.B. das loT Netzwerk über welches Feldgeräte miteinander kommunizieren) verwendet, obwohl dieser erste Rechner physisch entfernt (z.B. bei einem Nutzer der Geräte, insbesondere Feldgeräte, in dem Netzwerk bedienen oder kontrollieren will, zu Hause, oder an einem anderen Standort) und z.B. nur über eine Cloud, z.B. das Internet (www) auf das Netzwerk zugreift.

So ist der erste Rechner topologisch unmittelbar in dem Netzwerk vorgesehen, obwohl dieser erste Rechner physisch entfernt aufgestellt ist.

Es wird als Verbindung zwischen dem ersten Rechner und dem Netzwerk eine so genannte Web-Socket-Verbindung hergestellt.

WebSocket ist ein auf dem Transportprotokoll TCP basierendes Netzwerkprotokoll, das bidirektionale Verbindungen zwischen einer Webanwendung und einem WebSocket-Server herstellt. Diese Verbindungen erlauben einen effizienten, schnellen und dynamischen Informationsaustausch. Sie eignen sich für Echtzeit-Web-Applikationen. Alle derzeit gängigen Webbrowser unterstützen WebSocket. Die WebSocket-Verbindung wird in einem Handshake-Verfahren über eine HTTP-Anfrage ausgehandelt und aufgebaut.

Ein weiterer Vorteil der WebSocket Verbindung ist, dass Websockets die üblichen http Ports (z.B. 80, 443) verwenden und somit keine zusätzliche Port Freigabe in der Firewall des Unternehmens gemacht werden muss.

Die mit WebSocket aufgebaute Verbindung hält so lange an, bis eine der beteiligten Parteien sie unterbricht. Sobald eine Partei die Verbindung unterbricht, kann die zweite Partei nicht mehr kommunizieren, da die Verbindung automatisch an ihrer Vorderseite unterbrochen wird.

Der erste Rechner der Rechneranordnung ist über eine erste Websocket Verbindung mit der Cloud verbunden oder verbindbar, und ein erstes Gerät der Geräte des Netzwerks ist über eine zweite Websocket Verbindung mit der Cloud verbunden oder verbindbar. Die Cloud verbindet die erste und zweite Websocket Verbindung miteinander und ist demnach zwischen dem ersten Rechner und dem ersten Gerät der Geräte des Netzwerks vorgesehen.

Der erste Rechner ist als VPN-Client und als erster Websocket-Client konfiguriert.

Das erste Gerät der Geräte des Netzwerks ist als VPN-Server im TCP-Server Modus und als zweiter Websocket-Client konfiguriert.

Der erste Websocket-Client agiert als TCP-Proxy für den VPN-Server auf dem ersten Gerät der Geräte.

Die Cloud verbindet die erste und zweite Websocket Verbindung miteinander, sodass Nachrichten zwischen dem ersten und zweiten Websocket-Client ausgetauscht werden können.

Ein VPN-Server kann ein physischer oder virtueller Server sein, der zum Hosten und Bereitstellen von VPN-Diensten für Benutzer konfiguriert ist. Der Server kann eine Kombination aus VPN-Hardware und VPN-Software sein, mit dem VPN-Klienten eine Verbindung zu einem sicheren privaten Netzwerk herstellen können. Im Gegensatz zu den meisten Servern verfügt ein VPN-Server z.B. über mehr logische und physische Kommunikationsports. Das erste Gerät der Geräte des Netzwerks ist somit als VPN-Server konfiguriert. Zudem arbeitet dieser VPN-Server im TCP-Server Modus.

Wenn dieser im TCP-Server-Modus arbeitet, hört dieser z.B. Netzwerkverbindungen ab und baut Netzwerkverbindungen auf, die üblicherweise für die Kommunikation mit TCP-Clients in einem LAN verwendet werden. Gemäß dem TCP-Protokoll hat der TCP Server Unterschiede im Verbindungs-/Trennungsstatus, um eine zuverlässige Datenübertragung zu gewährleisten.

Der TCP-Server-Modus unterstützt z.B. die Keep-Alive-Funktion. Im TCP Server Modus wird z.B. der vom Benutzer eingestellte lokale Port abgehört und eine Verbindung nach dem Empfang der Verbindungsanfrage aufgebaut.

Ein VPN-Client ist z.B. eine softwarebasierte Technologie, die eine sichere Verbindung zwischen dem Benutzer und dem VPN-Server herstellt. Einige VPN-Clients arbeiten automatisch im Hintergrund, während andere über Front-End-Schnittstellen verfügen, wodurch die direkte Interaktion und Konfiguration ermöglicht wird. VPN-Clients sind häufig Anwendungen, die auf einem Computer installiert sind. Einige Organisationen bieten jedoch einen speziell entwickelten VPN-Client an, bei dem es sich um ein mit VPN-Software vorinstalliertes Hardwaregerät handelt.

Der erste Rechner ist als VPN-Client konfiguriert.

Der erste Websocket-Client agiert als TCP-Proxy für den VPN-Server auf dem ersten Gerät der Geräte. Ein TCP-Proxy ist z.B. ein Server, der als Vermittler zwischen einem Client und dem Zielserver fungiert. Clients stellen Verbindungen zum TCP-Proxy-Server her, der dann eine Verbindung zum Zielserver aufbaut.

Der erste und zweite WebSocket-Client auf dem ersten Rechner bzw. dem ersten Gerät der Geräte kommuniziert z.B. mit einem entsprechenden WebSocket-Server, der z.B. in der Cloud zwischen den beiden vorgesehen ist.

Der WebSocket-Server kann somit vorteilhafterweise in der Cloud vorgesehen sein. Ein WebSocket-Server wird z.B. durch eine Anwendung implementiert, die einen Port eines TCP-Servers überwacht, der einem bestimmten Protokoll folgt. Ein WebSocket-Server kann in jeder Serverseitigen Programmiersprache geschrieben werden, die dazu in der Lage ist: Berkeley sockets, siehe auch C(++), Python, PHP, oder Serverseitiges JavaScript. Der WebSocket-Server dient lediglich als Mittler zwischen zwei Endpunkten (wie bei einem Chat). Sowohl der Rechner als auch das Gerät aus dem Netzwerk von Geräten (z.B. Feldnetz) verbinden sich zu diesem Server und können somit Nachrichten bzw. Daten austauschen.

So ist ein erstes Gerät der Geräte des Netzwerks als VPN-Server und gleichzeitig als Websocket Client konfiguriert. Der VPN Server läuft somit zum Beispiel auf dem Gerät (hierin als erstes Gerät bezeichnet) welches im Netzwerk von Geräten (Feldnetz) das Gateway zur Cloud ist. Dieses Gerät ist zugleich Websocket-Client, um mit dem in der Cloud vorgesehen WebSocket-Server zu kommunizieren.

Vorteilhafterweise wird als VPN Server ein OpenVPN Server verwendet. Bei OpenVPN handelt es sich um eine frei verfügbare Open-Source-Software, mit der sich verschlüsselte virtuelle private Netze (VPNs) aufbauen lassen. Die Software unterstützt viele verschiedene Betriebssysteme und kann einzelne Clients aber auch ganze Netzwerke koppeln. Für den Verbindungsaufbau kann auf beiden Seiten die OpenVPN-Software vorhanden und passend konfiguriert sein. Die OpenVPN-Software kann auf Rechnern, Servern oder Netzwerkgeräten wie Routern installiert werden und unterstützt Betriebssysteme wie Windows, Linux, macOS, Solaris, OpenBSD, Android und viele weitere. Die Nutzdaten überträgt die Software über TCP- oder UDP-Pakete. Auch über NAT-Grenzen hinweg (NAT - Network Address Translation) ist die VPN-Software nutzbar. Die im VPN ausgetauschten Daten sind z.B. per SSL/TLS verschlüsselt. Für die Verschlüsselung kommt z.B. die Bibliothek OpenSSL zum Einsatz.

Ein solcher OpenVPN-Server kann auf dem ersten Gerät mittels Linux oder Ähnlichem installiert werden.

Passend zu der VPN-Server Konfiguration des ersten Gerätes der Geräte des Netzwerks ist der erste Rechner als VPN-Client konfiguriert.

Jedenfalls werden durch die vorbeschriebene Konfiguration über die Cloud Nachrichten zwischen den dem ersten und zweiten Websocket-Client ausgetauscht.

Die entsprechenden Nachrichten werden z. B. von einem der zuvor genannten Websocket-Clients weitergeleitet und umgekehrt.

Zudem ist es vorteilhaft, dass sowohl auf dem ersten Gerät ein virtuelles netzwerkseitiges TAP Device angelegt wird als auch auf dem ersten Rechner ein entsprechendes virtuelles rechnerseitiges TUN und/oder TAP Device angelegt wird.

Das TUN/TAP-Konzept ist allgemein bekannt. Sogenannte TUN und TAP sind virtuelle Netzwerk-Kernel-Treiber, die Netzwerkgeräte über Software simulieren. TUN steht hierbei für Netzwerk-Tunnel und TAP für Netzwerk-Ausleitung (englisch: tap) aber auch für Terminal Access Point. Während sich normalerweise hinter einem Netzwerkgerät (wie zum Beispiel eth0) direkt eine entsprechende Hardware in Form einer Netzwerkkarte verbirgt, werden Pakete, die an ein TUN/TAP-Gerät gesendet werden, an ein Programm im Userspace weitergeleitet und umgekehrt. Damit ein Userspace-Programm auch auf TUN/TAP-Geräte zugreifen kann, haben diese im Gegensatz zu realen Ethernet-Karten eine Gerätedatei mit der Bezeichnung tunN bzw. tapN unterhalb von /dev.

TUN simuliert ein Ende-zu-Ende-Netzwerkgerät (OSI-Layer 3) und kommuniziert per IP-Paketen mit der Software, während TAP eine Punkt-zu-Punkt-Verbindung via Ethernet-Gerät simuliert (OSI-Layer 2) und über Ethernet-Frames mit der Software kommuniziert.

Soweit also hier TUN Devices beschrieben werden findet die Kommunikation über die Vermittlungsschicht statt, und soweit TAP Devices beschrieben werden findet die Kommunikation über die Sicherungsschicht des zuvor beschriebenen OSI Models statt.

Die entsprechenden TUN bzw. TAP Devices bilden die zuvor genannte virtuelle Netzwerkschnittstelle zwischen dem ersten Rechner und dem Netzwerk.

Das restliche Netzwerk enthält weitere Geräte. Dies können so genannte Feldgeräte zum Steuern und/oder Beobachten einer Anlage (z.B. in einem Produktionsbetrieb) sein. Ein Beispiel eines solchen Feldgeräts sind Sensoren oder Aktuatoren. Dies können aber auch einfache Server, PCs oder ähnliches sein oder eine Mischung aus Feldgeräten, Servern, PCs oder ähnliches, die ein Netzwerk bilden, welches über LAN und/oder WLAN miteinander kommuniziert.

Jedenfalls kann von dem ersten Rechner über das erste Gerät, auf dem der VPN-Server, insbesondere OpenVPN-Server) implementiert ist, unmittelbar auf Daten zu den weiteren Geräten in dem Netzwerk, die z. B. über LAN oder WLAN miteinander verbunden sind, ausgetauscht werden.

Dies kann dadurch ermöglicht werden, dass das TAP Device auf der zweiten Schicht bzw. dass das TUN Device auf der dritten Schicht, welches in dem ersten Gerät implementiert ist, über eine (virtuelle) Brücke an das restliche Netzwerk angebunden ist. Eine solche Brücke kann eine Netzwerk- und/oder Softwarebrücke sein.

Dem rechnerseitigen TUN bzw. TAP Device, welches als eine Art virtueller TUN bzw. TAP Ethernet Adapter fungiert, wird z.B. eine IP-Adresse aus dem Netzwerk selbst zugewiesen.

In dem Netzwerk sind beispielsweise vorgegebene IP-Adressen und Gruppen von IP-Adressen entsprechenden Geräten bzw. Rechnern zugewiesen. Dort gibt es auch noch freie IP-Adressen. Eine solche IP-Adresse wird dem ersten Rechner, der von dem System selbst physisch getrennt ist, aber topologisch mit diesem verbunden ist, zugewiesen.

Eine weitere vorteilhafte Weiterbildung der Erfindung ist, dass einer oder mehrere weitere Rechner über die Cloud z.B. über das Internet (www) an das Netzwerk von Geräten anbindbar sind. Hierbei ist für jeden weiteren Rechner eine entsprechende weitere virtuelle Schnittstelle zwischen dem Rechner und dem Netzwerk vorgesehen, welche Netzwerkschnittstelle auf der Sicherungsschicht vorgesehen ist.

Zum einen kann diese Schnittstelle vorteilhaft in dem ersten Gerät der Geräte des Netzwerks vorgesehen sein, also demselben Gerät, auf dem auch die Schnittstelle für den ersten Rechner vorgesehen ist. Alternativ kann diese Schnittstelle aber auch in anderen Geräten konfiguriert sein. Die Struktur ist jedoch dieselbe wie die zuvor für den ersten Rechner beschriebene Konfiguration.

Auch die weiteren Geräte kommunizieren dann vorteilhafterweise über entsprechende netzwerkseitige TUN bzw. TAP Devices und rechnerseitige virtuelle TUN bzw. TAP Devices, wobei den entsprechenden Rechnern dann auch jeweils IP-Adressen aus dem Netzwerk zugeordnet sind.

Soweit einige oder alle Schnittstellen zu den Rechnern in demselben Gerät des Servers implementiert werden, sind dort auch die entsprechenden weiteren TUN bzw. TAP-Devices implementiert.

Als ein nebengeordneter Aspekt der Erfindung wird zudem ein Verfahren zum Verbinden eines ersten Rechners über eine Cloud an ein Netzwerk von Geräten angegeben. Das Verfahren weist die Schritte von Anspruch 8 auf.

Es wird ein virtuelles netzwerkseitiges TUN oder TAP-Device auf einem ersten Gerät der Geräte des Netzwerks angelegt. Danach wird das virtuelle netzwerkseitige TUN oder TAP-Device zu einer Brücke, mit der dieses mit dem restlichen Netzwerk verbunden ist hinzugefügt. Es wird ein VPN-Server auf dem ersten Gerät der Geräte des Netzwerks gestartet. Es wird ein TCP-Proxy auf dem ersten Rechner gestartet. Es wird der VPN-Client auf dem ersten Rechner, welcher ein virtuelles rechnerseitiges TUN oder TAP Device auf dem ersten Rechner anlegt, gestartet. Zudem wird eine freie IP-Adresse aus dem Netzwerk von Geräten dem rechnerseitigen TUN oder TAP Device zugewiesen.

Die vorgenannten Verfahrensschritte entsprechen den zuvor genannten für die Vorrichtung diskutierten Aspekten, insbesondere im Hinblick auf die Implementierung der entsprechenden Funktionen auf dem ersten Rechner und dem ersten Gerät der Geräte, wodurch dann z. B. die folgende Konfiguration erhalten wird:
Der erste Rechner ist als VPN-Client und als erster Websocket-Client konfiguriert. Das erste Gerät der Geräte des Netzwerks ist als VPN-Server im TCP-Server Modus und als zweiter Websocket-Client konfiguriert. Der erster Websocket-Client agiert als TCP-Proxy für den VPN-Server auf dem ersten Gerät der Geräte. Die Cloud verbindet die erste und zweite Websocket Verbindung miteinander, sodass Nachrichten zwischen dem ersten und zweiten Websocket-Client ausgetauscht werden können.

Soweit in Bezug auf das Verfahren von TUN bzw. TAP Devices gesprochen wird, gilt auch das zuvor Gesagte. Soweit also hier TUN Devices beschrieben werden findet die Kommunikation über die Vermittlungsschicht statt und soweit TAP Devices beschrieben werden findet die Kommunikation über die Sicherungsschicht des zuvor beschriebenen OSI Models statt.

Gemäß dem zuvor beschriebenen Verfahren können auch einer oder weitere Rechner, z.B. zweite, dritte, vierte Rechner, die physisch entfernt stehen, über eine Cloud an dieses Netzwerk angeschlossen werden.

Gemäß eines weiteren nebengeordneten Aspekts gemäß Anspruch 10 wird der Betrieb einer Rechneranordnung mit einem ersten Rechner und einem Netzwerk von Geräten angegeben.

Der Betrieb bezieht sich insbesondere auf den Betrieb der zuvor beschriebenen Rechneranordnung, nachdem der erste Rechner und/oder weitere Rechner über ein Verfahren nach Anspruch 8 miteinander verbunden sind. Bei dem Betrieb werden Daten zwischen dem ersten Rechner und dem Netzwerk über eine virtuelle Netzwerkschnittstelle zwischen dem ersten Rechner und dem Netzwerk ausgetauscht, wobei diese virtuellen Netzwerkschnittstellen in der Sicherungsschicht (also der OSI-Schicht 2) vorgesehen sind.

Somit können Datenpakete zwischen dem ersten Rechner zu dem ersten Gerät transferiert werden, und diese Datenpakete werden an das netzwerkseitige TAP Device weitergeleitet und von dort über eine Brücke in das Netzwerk eingespeist. Diese Brücke kann eine so genannte Softwarebrücke sein, d.h. eine softwaremäßige Implementierung einer Brücke auf dem ersten Gerät. Diese Brücke schließt das erste Gerät beispielsweise über ein LAN oder auch ein WLAN an das restliche Netzwerk mit den entsprechenden Geräten, die Feldgeräte, insbesondere Sensoren, sein können, an.

Weitere vorteilhafte Ausgestaltungen der Erfindung werden nachfolgend anhand der Figuren beschriebenen.

In dieser zeigen:
- Fig. 1: einen entsprechenden Überblick über eine erfindungsgemäße Rechneranordnung;
- Fig. 2: eine Detailansicht der Verbindung eines ersten Geräts des Netzwerks mit einem ersten Rechner;
- Fig. 3: einen Überblick über die entsprechenden Lagen im OSI-Referenzmodell und ein Vergleich der entsprechenden Lagen nach dem TCP/IP Protokoll.

Die entsprechenden Lagen im OSI-Referenzmodell wurden in Bezug auf Fig. 3 schon in der Beschreibungseinleitung beschrieben und sind deshalb hier nicht weiter beschrieben.

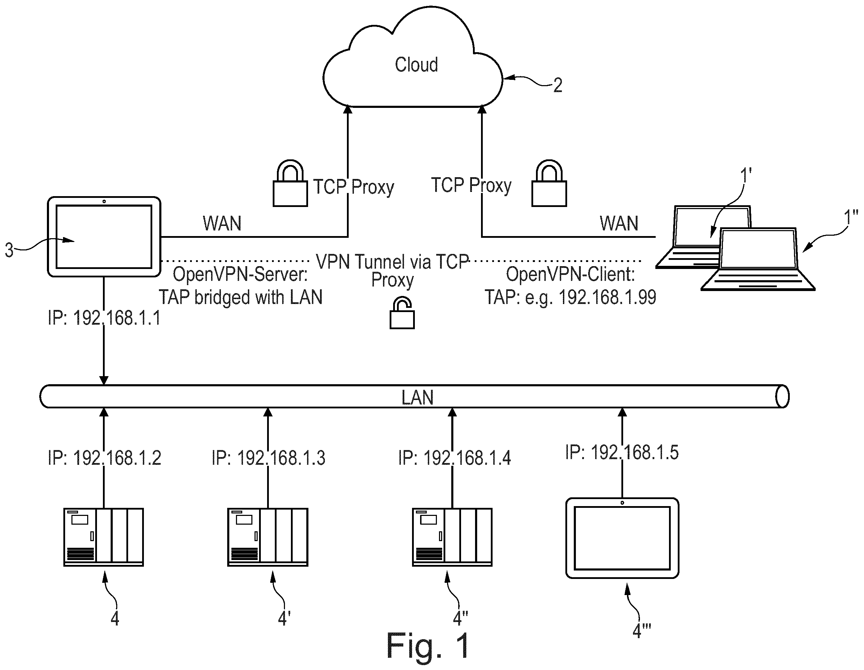

Figur 1 zeigt generell ein Beispiel einer erfindungsgemäßen Rechneranordnung.

Dort ist mit Bezugszeichen 1*'* ein erster Rechner und mit Bezugszeichen 1*"* ein zweiter Rechner (der als Beispiel für einen oder mehrere weitere Rechner dient) vorgesehen. Dies soll zeigen, dass ein oder mehrere Rechner an das in Fig. 1 auf der unteren und linken Seite dargestellte Netzwerk von Geräten 3, 4, 4*'*, 4*"*, 4‴ angeschlossen ist. Dies geschieht über eine mit Bezugszeichen 2 dargestellte Cloud. Dies kann eine Verbindung über das Internet (World Wide Web) sein oder auch eine Cloud in einem Unternehmen selber. Insbesondere wird bei dem vorliegenden Beispiel eine cloudbasierte Lösung der Firma Software AG verwendet. Die Lösung hat den Namen Cumulocity loT. *Cumulocity (Abk. auch: C8Y)* ist eine Device Cloud Plattform. Damit können Devices/Geräte/Dinge vernetzt und zentral und remote (also in der Cloud) überwacht und angesteuert werden. Es kann auch jede andere Device Cloud Plattform verwendet werden. Es ist nicht notwendig die spezielle *Cumulocity Lösung zu verwenden.*

Devices werden z.B. mit einer Software gekoppelt, die in der Cloud betrieben wird. Die Devices senden statische Daten (z.B. Identität, Infos zu Hardware und Software, die das Device verwendet) und Laufzeitinformationen (Events, Alarme, Fehlermeldungen) an diese Plattform. Nutzer können sich online von jedem Standort aus an dieser Plattform anmelden und die Daten und den Status aller ihrer registrierten Devices einsehen. Außerdem erhalten sie in Realtime Events und Fehler, um schnell darauf reagieren zu können. Es ist sogar möglich, Befehle an das Device zu senden (z.B. Restart oder Firmware Update), ohne dass jemand dafür vor Ort sein muss.

Cumulocity oder auch eine andere Device Cloud Plattform stellt üblicherweise sowohl die Infrastruktur als auch die Software zur Verfügung, um die Devices ans Netz zu bringen und zentral zu verwalten. Cumulocity hostet die Software in der Cloud und bietet Standardkomponenten an, mit denen sich die Devices registrieren und auch typische Daten der Devices einsehen, überwachen und steuern lassen.

Die zuvor beschriebene Lösung ist ein Beispiel soll aber nicht einschränkend verstanden werden. Die Verbindung des Rechners über die Cloud kann im weitesten Sinne auch jede Verbindung über das Internet (World Wide Web) sein-

Jedenfalls kann/können der oder die Rechner 1, 1' physisch von dem Netzwerk getrennt sein, jedoch, wie nachfolgend beschrieben, sind der/die Rechner topologisch in diesem Netzwerk integriert, und zwar so als ob sie auch physisch innerhalb dieses Netzwerks vorgesehen sind.

In der Cloud ist jedenfalls der Websocktet Sever der zur Verbindung eines ersten Gerätes 3 des Netzwerks mit dem Rechner 1, 1' dient, vorgesehen.

Auf diesem ersten Gerät ist der entsprechende VPN-Server, der unten beschrieben ist, implementiert.

Somit dient das erste Geräte als WebSocket Client und gleichzeitig als VPN Server. Der WebSocket Client auf dem ersten Gerät wird in den Ansprüchen auch als zweiter WebSocket Client beschrieben, um diesen von dem WebSocket Client auf dem ersten Recher, der in den Ansprüchen als erster WebSocket Clientbeschrieben wird zu unterscheiden.

Im vorliegenden Beispiel handelt es sich um eine OpenVPN-Lösung und somit um einen OpenVPN-Server.

Auch wenn zuvor und nachfolgend die Websocket Verbindung bzw. der WebSocket Server (in der Cloud) beschrieben ist, bzw. die OpenVPN Lösung mit dem OpenVPN Server (in dem ersten Gerät) beschrieben ist, ist die Erfindung nicht darauf beschränkt sondern allgemein auf jeden Client und damit verbindbaren Server, insbesondere virtuellen Server in dem Netzwerk anwendbar, zumindest solange, als dass die virtuelle Schnittstelle auf der zweiten Lage implementiert werden kann.

In diesem ersten Gerät 3 ist die entsprechende virtuelle Netzwerkschnittstelle zwischen dem ersten Rechner und dem Netzwerk implementiert.

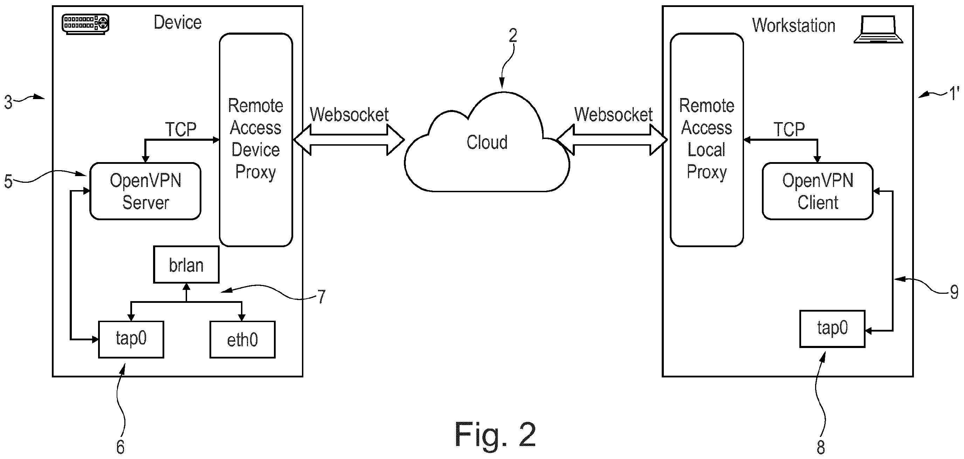

Über einen VPN-Tunnel mittels eines TCP-Proxys kann dann auf den OpenVPN-Server 5 (vgl. Fig. 2) des ersten Geräts 3 zugegriffen werden. Auf dem ersten Rechner bzw. jedem Rechner 1, 1' ist ein entsprechender OpenVPN Client 9 vorgesehen.

Innerhalb des ersten Geräts 3 wird über den OpenVPN-Server 5 ein virtuelles TAP Device 6 gelegt, das als netzwerkseitiges TAP Device beschrieben ist. Dieses wird mit dem lokalen Netzwerk, das ein LAN oder WLAN Netzwerk oder eine Kombination der beiden sein kann, über eine Brücke verbunden. Diese Brücke 7 kann eine Softwarebrücke sein.

Ein entsprechendes rechnerseitiges virtuelles TAP Device 8 ist auch auf den entsprechenden Rechnern 1*'*, 1*"* vorgesehen.

Deshalb kann, wie schematisch in Fig. 1 dargestellt, dem entsprechenden Rechner 1, 1' eine entsprechende IP-Adresse aus dem Netzwerk (vorliegend die IP Adresse 192.168.1.99), die für das Netzwerk charakteristisch ist, zugeordnet werden.

Dies ist beispielsweise eine IP-Adresse aus einem IP-Adressen Pool, die in dem System vorgesehen sind für Rechner, die physikalisch remote aufgestellt sind.

Die weiteren IP-Adressen für die entsprechenden Geräte innerhalb des Netzwerks sind in Fig. 1 angegeben. Dem ersten Gerät 3 ist die IP-Adresse 192.168.1.1 zugewiesen. Den weiteren Geräten sind die entsprechenden IP-Adressen 192.168.1.2, 192.168.1.3, 192.168.1.4, 192.168.1.5 zugewiesen.

Ein solches Gerät kann ein PC, ein Feldgerät, insbesondere ein Sensor oder andere bekannte Einrichtungen sein.

Jedenfalls kommunizieren diese über ein Netzwerk (LAN bzw. WLAN), das im vorliegenden Fall als Feldnetz aufgebaut ist.

Bei der vorliegenden Netzwerkanordnung handelt es sich um eine Netzwerkanordnung, die als Internet der Dinge-System konfiguriert ist.

Somit kann von dem ersten Rechner 1 bzw. 1' die entsprechenden Funktionen in den Feldgeräten 4, 4', 4", 4‴ angesteuert, bzw. abgerufen werden.

Für den Aufbau der Verbindung zwischen dem ersten Rechner 1' und dem Netzwerk wird auf dem ersten Gerät 3 ein OpenVPN-Server mit dem TCP-Protokoll gestartet, der einen TAP Device 7 (netzwerkseitiges TAP Device) auf dem ersten Gerät anlegt und mit dem Feldnetz gebrückt ist.

Die Rechnerseite baut in dem vorliegenden Fall mittels dem vorhandenen C8YLP einem TCP-Proxy (via WebSocket) zum Gerät auf und verbindet sich mit dem OpenVPN Client zu diesem Proxy.

Hierbei steht c8ylp für die TCP Proxy Lösung von Cumulocity. Die Cumulocity Lösung wurde als Beispiel zuvor beschrieben.

Die OpenVPN-Verbindung kann unverschlüsselt sein, weil die WebSocket-Verbindung bereits verschlüsselt ist.

Auf dem Rechner wird ein virtueller TAP Ethernet-Adapter implementiert, welcher eine IP aus dem Feldnetz zugewiesen bekommt. Damit ist der Rechner toplogisch in dem Feldnetz und kann mit den Feldgeräten so kommunizieren, als wären sie direkt verbunden.

Fig. 2 zeigt eine Detailansicht der Verbindung zwischen dem ersten Rechner 1' und dem ersten Gerät 3 des Netzwerks.

Der erste Rechner 1*'* weist in dem vorliegenden Beispiel einen OpenVPN-Client 9 auf. Das erste Gerät 3 weist in dem vorliegenden Beispiel einen OpenVPN-Server 5 auf.

Der OpenVPN-Server 5 ist mit dem TAP Device 6 verbunden, das seinerseits über die Brücke 7 mit dem Netzwerk (eth0) verbunden ist.

Das entsprechende TAP Device ist ein virtuelles TAP Device und die Brücke ist eine virtuelle Softwarebrücke. Somit können die Pakete, die von dem ersten Rechner in das erste Gerät übertragen werden, über das TAP 0 an das Netzwerk weitergeleitet werden.

Zuvor wurde die Anbindung eines ersten Rechners beschrieben. Es können auch mehrere Rechner über dasselbe Gerät 3 an das Netzwerk angebunden werden, oder es können auch weitere Rechner jeweils über ein separates Gerät des Netzwerks angebunden werden.

Jedenfalls findet die Anbindung jeweils über eine virtuelle Netzwerkschnittstelle in der Sicherungsschicht statt. Dadurch verhält sich der jeweilige Rechner so, als ob dieser toplogisch direkt mit dem Netzwerksystem, das insbesondere als Internet der Dinge konfiguriert ist, verbunden ist. Zuvor in dem Ausführungsbeispiel wurde die Sicherungsschicht beschrieben. Deshalb wurden auch als Beispiel die TAP Devices beschrieben. Anstelle der Anbindung über die Sicherungsschicht kann auch eine Verbindung über die Vermittlungsschicht vorteilhaft sein. Dann sind anstelle der TAP Devices TUN Devices vorzusehen. Als weitere Alternative bei der der Austausch der Nachrichten über die eine einzige Schicht stattfindet, kann auch an eine Variante gedacht werden, bei der Teile der Kommunikation über die Vermittlungsschicht und andere Teile über die Sicherungsschicht stattfinden. In diesem Fall wären dann die entsprechende Einrichtungen parallel vorzusehen.

### Bezugszeichenliste

- 1*'*: erster Rechner
- 1*"*: weiterer Rechner
- 2: Cloud
- 3: Gerät (erstes Gerät, Web-Socket Server)
- 4, 4*'*, 4*"*, 4*‴*: Gerät
- 5: OpenVPN Servers / Websocket-Server
- 6: netzwerkseitiges TAP Device
- 7: Brücke
- 8: rechnerseitiges TAP Device
- 9: OpenVPN Client

## Patentansprüche

1. Rechneranordnung mit einem ersten Rechner (1') und einem Netzwerk von Geräten (3, 4, 4*'*, 4*"*, 4*‴*),
wobei der erste Rechner (1*'*) über eine Cloud (2) an das Netzwerk von Geräten (3, 4, 4*'*, 4*"*, 4*‴*) anbindbar ist,
wobei
die Rechneranordnung eine virtuelle Netzwerkschnittstelle zwischen dem ersten Rechner (1*'*, 1*"*) und dem Netzwerk aufweist, welche in der Sicherungsschicht oder in der Vermittlungsschicht vorgesehen ist,
wobei die Rechneranordnung derart konfiguriert ist, dass der erste Rechner (1*'*) über eine erste Websocket Verbindung mit der Cloud (2) verbindbar ist, und ein erstes Gerät (3) der Geräte (3, 4, 4*'*, 4*"*, 4*‴*) des Netzwerks über eine zweite Websocket Verbindung mit der Cloud (2) verbindbar ist,
wobei der erste Rechner (1') als VPN-Client und als erster Websocket-Client konfiguriert ist,
wobei das erste Gerät (3) der Geräte (3, 4, 4*'*, 4*"*, 4*‴*) des Netzwerks als VPN-Server im TCP-Server-Modus und als zweiter Websocket-Client konfiguriert ist,
wobei der erster Websocket-Client als TCP-Proxy für den VPN-Server auf dem ersten Gerät (3) der Geräte (3, 4, 4*'*, 4*"*, 4*‴*) agiert,
wobei die Cloud (2) die erste und zweite Websocket Verbindung miteinander verbindet, sodas Nachrichten zwischen dem ersten und zweiten Websocket-Client ausgetauscht werden.

2. Rechneranordnung nach Anspruch 1, **dadurch gekennzeichnet, dass** auf dem ersten Gerät (3) ein virtuelles netzwerkseitiges TUN und/oder TAP Device (6) angelegt ist, und auf dem ersten Rechner (1*'*) ein entsprechendes virtuelles rechnerseitiges TUN und/oder TAP Device (8) angelegt ist, wobei die beiden TUN und/oder TAP Devices (6, 8) die virtuelle Netzwerkschnittstelle zwischen dem ersten Rechner (1*'*, 1*"*) und dem Netzwerk bilden.

3. Rechneranordnung nach Anspruch 2, **dadurch gekennzeichnet, dass** das netzwerkseitiges TUN und/oder TAP Device (6) über eine Brücke (7) mit dem restlichen Netzwerk verbunden ist.

4. Rechneranordnung nach Anspruch 2 oder 3, **dadurch gekennzeichnet, dass** dem rechnerseitigen TUN und/oder TAP Device (8) eine IP-Adresse aus dem Netzwerk zugewiesen ist.

5. Rechneranordnung nach Anspruch 3 oder 4, **dadurch gekennzeichnet, dass** das restliche Netzwerk als ein Feldnetz konfiguriert ist, in dem Feldgeräte, welche die Geräte (4, 4*'*, 4*"*, 4*‴*) bilden, angeordnet sind.

6. Rechneranordnung nach einem der vorherigen Ansprüche, **dadurch gekennzeichnet, dass** die Rechneranordnung als Internet der Dinge System (IOT-System) konfiguriert ist.

7. Rechneranordnung nach einem der vorherigen Ansprüche, **dadurch gekennzeichnet, dass** ein oder mehrere weitere Rechner (1*"*) über die Cloud (2) an das Netzwerk von Geräten (3, 4, 4*'*, 4*"*, 4*‴*) anbindbar ist/sind, welcher/welche jeweils über eine weitere virtuelle Netzwerkschnittstelle zwischen dem entsprechenden weiteren Rechner (1*"*) und dem Netzwerk aufweist, welche in der Sicherungsschicht vorgesehen ist.

8. Verfahren zum Verbinden eines ersten Rechners (1*'*) über eine Cloud (2) an ein Netzwerk von Geräten (3, 4, 4*'*, 4*"*, 4*‴*) enthaltend die Schritte:
- Anlegen eines virtuellen netzwerkseitigen TUN oder TAP-Devices (6) auf einem ersten Gerät (3) der Geräte (3, 4, 4*'*, 4*"*, 4*‴*) des Netzwerks,
- Hinzufügen des virtuellen netzwerkseitiges TUN oder TAP-Devices (6) zu einer Brücke (7) mit der dieses mit dem restlichen Netzwerk verbunden ist,
- Starten eines VPN Servers (5) auf dem ersten Gerät (3) der Geräte (3, 4, 4*'*, 4*"*, 4*‴*) des Netzwerks,
- Starten eines TCP-Proxys auf dem auf dem ersten Rechner (1*'*),
- Starten des VPN-Clients auf dem ersten Rechner (1*'*) welcher ein virtuelles rechnerseitiges TUN oder TAP Device (8) auf dem ersten Rechner (1*'*) anlegt,
- Zuweisung einer freien IP-Adresse aus dem Netzwerk von Geräten (3, 4, 4*'*, 4*"*, 4*‴*) zu dem rechnerseitigen TUN oder TAP Device (8) .

9. Verfahren nach Anspruch 8, **dadurch gekennzeichnet, dass** der VPN Server (5) das TCP-Protokoll nutzt und dass der VPN Server (5) das netzwerkseitige TUN oder TAP Device (6) nutzt.

10. Betrieb einer Rechneranordnung mit einem ersten Rechner (1') und einem Netzwerk von Geräten (3, 4, 4*'*, 4*"*, 4*‴*), wobei Daten zwischen dem ersten Rechner (1') und dem Netzwerk über eine virtuelle Netzwerkschnittstelle zwischen dem ersten Rechner (1') und dem Netzwerk stattfindet, welche in der Sicherungsschicht oder Vermittlungsschicht vorgesehen ist, wobei von einem in einem ersten Gerät (3) der Geräte (3, 4, 4*'*, 4*"*, 4*‴*) des Netzwerks konfigurierten VPN Server (5) Datenpakete an ein netzwerkseitiges TUN oder TAP Device (6) weitergeleitet werden und von dort über eine Brücke (7) in das restliche Netzwerk eingespeist werden.

11. Betrieb nach Anspruch 10 **dadurch gekennzeichnet, dass** einem rechnerseitiges TUN oder TAP Device (8) auf dem ersten Rechner eine IP-Adresse aus dem Netzwerk zugewiesen ist.
